# EUROPEAN PATENT APPLICATION

(11) **EP 2 733 998 A1**
(43) Date of publication of application: **21.05.2014**
(21) Application number: 12306431.3
(22) Date of filing: 16.11.2012
(51) Int. Cl.: H04W 52/24, H04W 52/26

(54) **A method for wireless energy optimization**

(71) Applicant: Thomson Licensing, 92130 Issy-les-Moulineaux (FR)
(72) Inventor: Goussard, Guillaume, 35576 Cesson-Sévigné Cedex (FR)
(74) Representative: Huchet, Anne

(57) **Abstract**

A method of optimizing the wireless power and signal integrity between an access point and multiple wireless clients includes an algorithm running in the access point that detects the downlink bandwidth and signal strength to a client device. Using this information, the wireless parameters of the access point can be adjusted to reach an optimal downlink power and signal condition. Uplink bandwidth and signal strength control to the access point is performed at each of the client devices using signal strength information provided by the access point. This achieves a dynamic balance with the adjustment of both the access point and the individual wireless client devices for transmit power control and signal integrity in a closed loop manner. The access point can perform the same dynamic balance while supporting multiple client devices operating in multiple frequency bands.

## Description

### FIELD

The present invention relates to wireless networks, and in particular, is related to a method to minimize transmitter power output at both an access point and a client device.

### BACKGROUND

The control of transmitter resources such as power level is important in wireless local area networks (WLANs) to not only preserve power but also to comply with local regulations and to promote compatibility between neighboring wireless systems. Some previous wireless systems provide a master and slave configuration for network discovery, control, wireless streaming, or file transfer. The location of the client within a home can impact wireless performance because of distance, obstructions, and neighboring wireless systems in operation, antenna placement, and other effects. The use of multiple input and multiple output (MIMO) has attempted to address some of these difficulties by providing multiple transmission paths from the master access point (AP) to the clients, and together with sophisticated hardware and software processing, to attempt to combine the total received information into a richer reception. In these cases, reflected signals received are added to the primary signal received and processed to provide additional data reception improvements. This technique can also enable spatial multiplexing where two spatial streams can be transmitted to double the throughput while still using only one RF channel. Other techniques such as channel bonding enabling a 40MHz channel, more efficient use of OFDM with additional sub-carriers, and frame aggregation and block ACK to minimize transmission overheads, have also improved data transfer efficiency of wireless systems. While these transmission and processing techniques are sophisticated, they could be even more effective with dynamic control of transmission power levels that are matched to the particular wireless environmental condition.

Other techniques have been used to conserve power, as defined in the WMM implementation in the IEEE 802.11n standard. However these are usually aimed at a standby operation that is switched either on or off at appropriate times. System oriented implementations using mesh networking have be used in commercial, industrial, and educational environments that can provide similar performance advantages and can cover a wide area. These are somewhat expensive and overkill for most home situations.

### SUMMARY

This summary is provided to introduce a selection of concepts in a simplified form that are further described below in the Detailed Description. The Summary is not intended to identify key features or essential features of the claimed subject matter, nor is it intended to be used to limit the scope of the claimed subject matter.

A method to control transmitter signal strength in a wireless local area network having an access point and multiple client devices includes setup of the access point to select a client device having the lowest downlink bitrate in a frequency realm of operation. Optimization of the downlink transmitter power level from the access point is achieved using the selected client device within the frequency realm by accommodating a maximum downlink bitrate to the selected client device using the lowest possible transmit signal power level. The access point provides measures of received uplink signal reception levels to multiple client devices. The individual client devices within each frequency realm use the information to optimize their individual uplink transmitter power level to provide the highest uplink bitrate from the individual client devices using the lowest uplink transmit signal power.

Additional features and advantages of the invention will be made apparent from the following detailed description of illustrative embodiments which proceeds with reference to the accompanying figures.

### BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention.
Figure 1 illustrates an exemplary wireless local area network environment suitable for implementing the present invention;
Figure 2 illustrates a workflow of an access point to regulate transmit downlink power according to an exemplary embodiment of the present invention;
Figure 3 illustrates a plot of access point transmit power and access point transmit downlink bitrate versus time according to an exemplary embodiment of the present invention;
Figure 4a illustrates a workflow diagram of an access point to regulate transmit downlink power according to an exemplary embodiment of the present invention;
Figure 4b illustrates a workflow diagram of a client device to regulate transmit uplink power according to an exemplary embodiment of the present invention;
Figure 5 illustrates a plot of access point and client device transmit power and access point and client device bitrate responses according to an exemplary embodiment of the present invention;
Figure 6 illustrates an access point block diagram according to an exemplary embodiment of the present invention; and
Figure 7 illustrates a client device block diagram according to an exemplary embodiment of the present invention.

### DETAILED DISCUSSION OF THE EMBODIMENTS

In the following description of various illustrative embodiments, reference is made to the accompanying drawings, which form a part thereof, and in which is shown, by way of illustration, various embodiments in the invention may be practiced. It is to be understood that other embodiments may be utilized and structural and functional modification may be made without departing from the scope of the present invention.

One aspect of the invention includes a method of optimizing the wireless transmit power and signal integrity between an access point (AP) and multiple wireless clients using combinations of 2.4 GHz and 5GHz IEEE 802.11 transmissions for media exchange. A process performed in the AP detects the bandwidth and signal strength of a wireless client device associated with the AP. Using this information, the wireless parameters of the AP can be adjusted for each band (2.4 GHz and 5GHz) of radio interfaces separately to reach an adequate power and signal condition for each of the bands. This can minimize extraneous wireless energy from being transmitted in high density environments (apartments, condos, etc.). Similar processing can be performed in the individual wireless client devices. The information of the client devices is shared with the AP, allowing a dynamic balance to be performed with the adjustment of both the AP downlink transmit level and the uplink transmit level from the individual client devices for power and signal integrity in a closed loop manner.

Potential system advantages to the current invention include potentially providing a rich amount of information to a user interface (UI) showing existing network connectivity and performance status. Radiated power adjustment from the AP for each of two radios (2.4GHz and 5GHz bands) is used to achieve adequate signal connectivity from the AP to the individual clients, while keeping radiated power to a controlled level that does not overdrive the transmission area and interfere with other adjacent WiFi networks in high population areas. The present invention includes separate adjustment for the associated wireless client devices to control their radiated power. The amount of downlink transmit power control is managed by the AP after the AP receives the current status of each of the clients. The AP can then create an overall adjustment scheme for the network, considering all the clients on both radio frequencies being used. The adjustment of the client device uplink transmit power can consider if the client is a battery operated device, in which case power conservation in the client can be prioritized. Together, this provides a full system closed loop control of the wireless operation instead of having individual devices determine their own state.

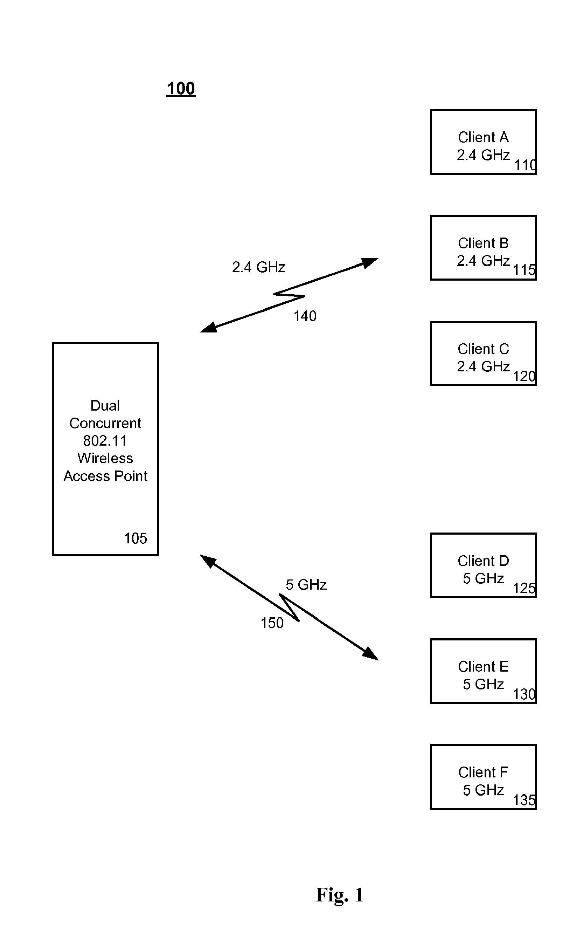

Figure 1 illustrates a wireless local area network (WLAN) environment having an access point (AP) and multiple client devices. Figure 1 depicts the access point 105 as having dual concurrent IEE 802.11 interfaces; one for 2.4GHz client devices and one for 5 GHz client devices. The 2.4 GHz client devices 110, 115, 120 communicate 140 using standard IEEE 802.11 protocols. The 5 GHZ client devices 125, 130, 135 also communicate 150 using standard IEEE 802.11 protocols. Both types of client devices conform to the IEEE 802.11 standard as stations (STAs) or Remote Terminals (RTs). Transmissions traveling from the access point (AP) to the client devices are termed downlink transmissions. Transmissions traveling from the client devices to the AP are termed uplink transmissions.

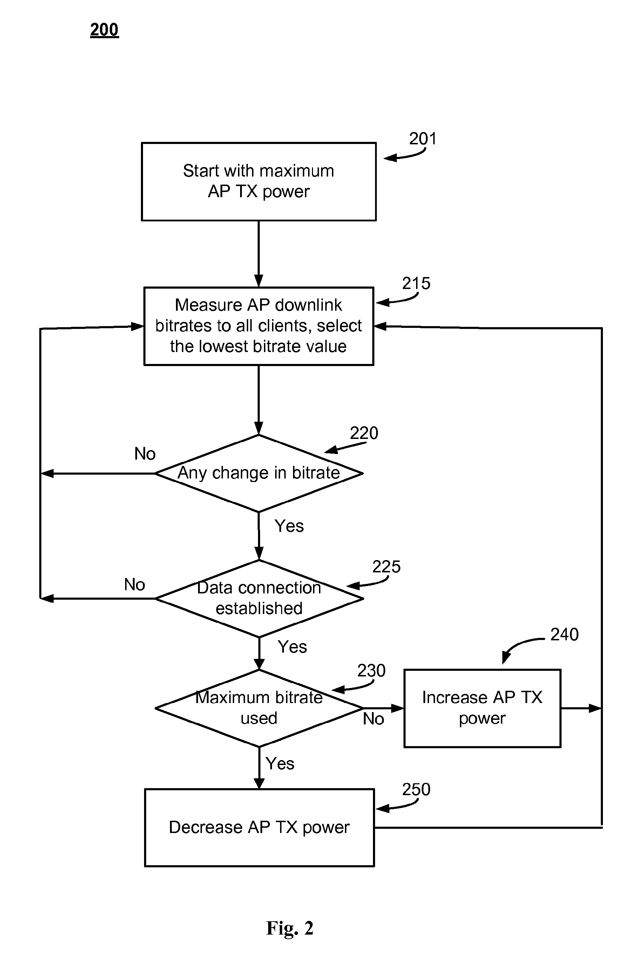

Figure 2 presents an exemplary flow diagram of a workflow performed by an access point in a WLAN to regulate the AP downlink transmitter power. In a WLAN environment, such as in Figure 1, where one AP and multiple access points exist, the flow diagram 200 of Figure 2 may be used to set up a regulated state where downlink transmitter power is minimized while providing a maximum bitrate for a client device having the least favorable reception conditions. Step 201 of the Figure 2 flow 200 starts the process by asserting a maximum AP downlink transmit power to all of the multiple clients that are compatible with the AP. This maximum AP downlink transmit power level may be governed by local regulations, environmental conditions, and compatibilities of the AP and client devices. Local regulation may place a ceiling threshold on transmitter power that may vary according to the local environment. Also, the compatibility between the AP and client devices may vary depending on the wireless mode. The wireless mode being different versions of IEEE 802.11 such as IEEE 802.11 A, B, G, N, etc.

At step 215, the AP measures the AP downlink bitrate for all client devices. In one aspect of the invention, this AP measurement is performed on a per band basis. For example, the downlink bitrate of the wireless clients of the 2.4 GHZ band of Figure 1 would be measured for process 200. Later, process 200 can be repeated for the 5 GHz band of devices in Figure 1. After the AP measures the downlink bitrate for all clients within a band of operation using the maximum AP transmit power, the client having the lowest bitrate is selected to ensure that AP downlink transmit power level is sufficient for all of the client devices within that band. At step 220, any change in bitrate is detected. The difference is measured using the last value measured and the previous value measured. If there is no change of bitrate, the flow 200 returns to step 215. If there is a change of bitrate, the flow 200 proceeds to step 225 where a data connection is assessed. A data connection may not exist under the condition of a mere RF link but no exchange of data. Such a condition can exits during the encryption and initialization phase of a AP to client exchange. If there is no data connection, the process 200 returns to step 215. If a data connection exists, then a maximum bitrate condition is checked at step 230.

At step 230, the maximum bitrate is the maximum bitrate that the AP and client pair can support. Factors affecting this maximum bitrate include the wireless mode (IEEE 802.11A, B, N, G etc.) as well as local regulation for the specific system. If the maximum bitrate is not being used, the process 200 moves to step 240 where the AP transmit (TX) power level is increased. This increase in TX power level allows the AP to transmit more RF signal strength to support a higher downlink bitrate. After incrementally increasing the TX power level of the AP, step 240 moves back to step 215. This step of increasing TX power can occur in the course of an iteration in operation of the flow 200.

If the maximum bitrate is being used, then a condition exists where the AP TX power signal level may be lowered to conserve transmit resources and to reduce emissions. Thus, if the maximum bitrate is being used on the lowest bitrate client device that was selected in step 215, then the process 200 moves from step 230 to step 250 where the transmitter power of the AP is incrementally decreased. The process 200 then moves back to step 215.

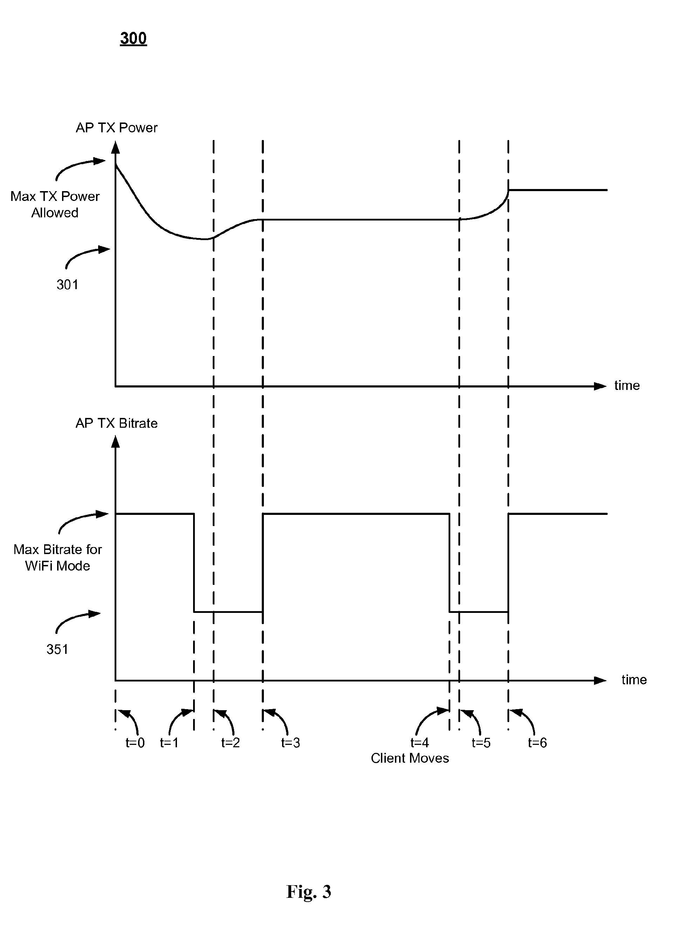

The process 200 essentially allows the lowest bitrate client device to operate with the lowest possible AP transmitter power level. This process is illustrated in Figure 3. Figure 3 depicts a sample plot of AP transmitter power and downlink bitrate of the lowest bitrate client device versus time while using the setup flow 200 of Figure 1. At time t=0, the AP transmit power level is set to a maximum allowed by the local regulations and wireless mode as previously described. Applying the process of Figure 1, the transmit power decreases while maintaining a maximum downlink bitrate for the selected wireless mode. At time t=1, the process 200 drops the transmitter power below a point which can sustain the maximum bitrate. Thus the downlink bitrate to the selected client device falls. At time t=2, the process immediately starts to increase the transmit power level to once again try to achieve the highest downlink bitrate to the selected client device. At time t=3, the transmit power level is once again sufficient to sustain the maximum downlink bitrate to the selected client device.

The transmit power level of the AP and the corresponding bitrate may then remain stable, this stable condition represents the lowest possible transmit bitrate which continues to support the downlink bitrate. At time t=4, the client device, assumed to be mobile, moves away from the AP. In the Figure 3 example, the move is of sufficient distance to reduce the received signal at the selected client device. As a result, the downlink bitrate of the client device, detected at the AP, falls. However, the process of Figure 2 starts to incrementally increase the transmit signal level at time t=5. At time t=6, the transmit signal power of the AP is once again sufficient to sustain a maximum downlink bitrate to the selected client device. It should be noted that the process 200 of Figure 2 operates to detect the lowest bitrate device at any time and select the lowest device in order to maintain a maximum bitrate downlink to all of the mobile client devices. As shown in the example plot of Figure 3, physical movements of the selected client device are accommodated by varying the transmit power level of the AP to provide a minimum transmit power level to support a maximum downlink bitrate.

The example process 200 of Figure 2 is conducted for the wireless client devices 110, 115, and 120 of the 2.4Ghz band of operation shown in configuration 100 of Figure 1. This setup procedure 200 is performed by AP 105 to find the lowest bitrate device among the 2.4GHz units. The process 200 of Figure 2 is also performed by the AP for the wireless client devices 125, 130, and 135 of the 5GHz band of operation shown in Figure 1. This setup procedure 200 is also performed by AP 105 to find the lowest bitrate device among the 5GHz units. Thus, the single AP 105 can separately accommodate optimization of downlink transmit power level for both the 2.4GHz band wireless client devices and for the 5GHz band wireless client devices. This results in one downlink transmit power level selected for the lowest bitrate client device of the 2.4 GHz client devices and another downlink transmit power level selected for the lowest bitrate client device of the 5 GHz client devices.

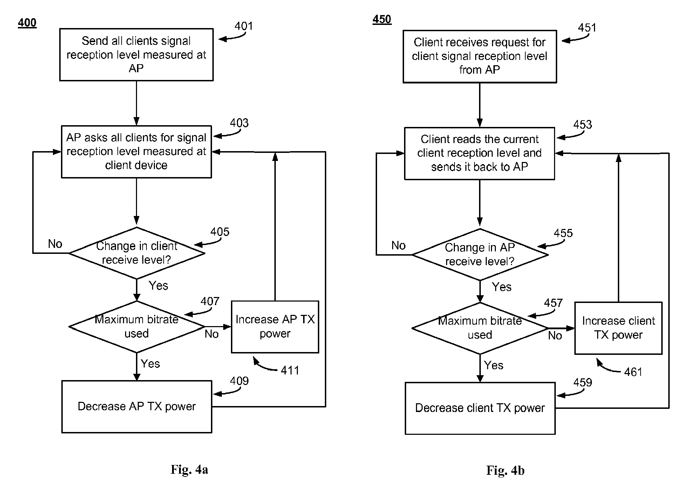

Figure 4a depicts the workflow 400 that occurs in the AP to regulate the AP downlink transmit (TX) power level. As indicated before in using Figure 2, the AP performs its downlink transmit power level control based on the client device having the lowest downlink bitrate. In one aspect of the present invention, the AP can measure the uplink signal reception level as received by the AP for each individual client device. In Step 401 of Figure 4a, the AP sends to all of the client devices their respective uplink signal reception level information as measured at the AP. Thus, all of the client devices receive information on their own uplink transmit signal level as it is received by the AP. In step 403, the AP transmits a request to each of the client devices for downlink signal reception levels as measured by the client device. The clients respond by providing their individual received signal strengths of the downlinked AP transmit signal. At step 405, the AP processes the received information from the individual client devices. Here, the AP determines a change in client downlink receive signal level for only the client that was previously selected as having the lowest downlink bitrate. Any change in bitrate for the selected, low bitrate client device is detected at step 405. The difference is measured using the last value measured and the previous value measured. At step 405, if there is no change in client device receive signal level, the process 400 returns to step 403. At step 405, if there is a change in client receive signal level, then the process 400 moves to step 407. At step 407, the maximum bitrate for the selected client device is tested. At step 407, the maximum bitrate is the maximum bitrate that the AP and selected client pair can support. As before, factors affecting this maximum bitrate include the wireless mode (IEEE 802.11A, B, N, G etc.) as well as local regulation for the specific system. If the maximum bitrate is not being used, the process 400 moves to step 411 where the AP transmit (TX) power level is increased. This increase in TX power level allows the AP to transmit more RF signal strength to support a higher downlink bitrate. After incrementally increasing the TX power level of the AP, step 411 moves back to step 403 where downlink signal reception levels measured at the client devices are polled.

If, at step 407, the maximum bitrate is being used, then a condition may exist where the AP TX power signal level may be lowered to conserve transmit resources and to reduce radiated emissions. Thus, if the maximum bitrate is being used on the lowest bitrate client device, then the process 400 moves from step 407 to step 409 where the transmitter power of the AP is incrementally decreased. The process 400 then moves back to step 403. The process 400 essentially allows the lowest bitrate client device to operate with the lowest possible AP transmitter power level.

Figure 4b depicts a workflow process 450 conducted by each of the individual client devices to control its response or uplink transmit power level radiated from the individual client devices. At step 451, each client receives a request from the AP for a downlink signal reception level as measured by the individual client device. Essentially, this is the client effect of step 401 of Figure 4a. In response, each client measures its own received downlink signal reception level and forwards the information to the AP at step 453. At step 455, client device checks to see if there has been a change in the downlink signal reception level as measured by the individual client device.. The difference is measured using the last value measured and the previous value measured. If there is no change in the downlink signal level received at the client device, then the process 450 moves back to step 453. If, at step 455, it is determined that the downlink signal received by the individual client device has changed, then step 457 is entered where the uplink bitrate of the client device is checked. Here, the uplink bitrate is a maximum bitrate that the individual client device can transmit back to the AP based on the local environment constraints including the compatibility of the AP and the individual client.

If the maximum uplink bitrate is not being used, then the process 450 moves from step 457 to step 461 where the client uplink signal transmission power level is increased. This increase in uplink power level may cause the client to AP link to become more robust and eventually help in establishing a maximum uplink bitrate for the individual client device. After the incremental increase in uplink power level at step 461, the process 450 moves to step 453.

If, at step 457, the maximum uplink bitrate from the individual client device is already at its maximum bitrate, then a condition may exits where excess transmit power is being used. Thus, the process 450 moves from step 457 to step 459 where an incremental decrease in the uplink power level is made. The process 450 within the client device then moves to step 453. The process 450 has the effect of optimizing the uplink power from each individual client device by using the lowest possible uplink transmit power level from the individual client device to achieve the maximum uplink transmit bitrate.

In one aspect of the invention, each individual client device utilizes the process of Figure 4b and thus each individual client device gets information from the AP concerning its own uplink signal reception level as measured by the receiving AP. This information is then used in the process 450 to optimize each of the uplink transmitters within the client devices.

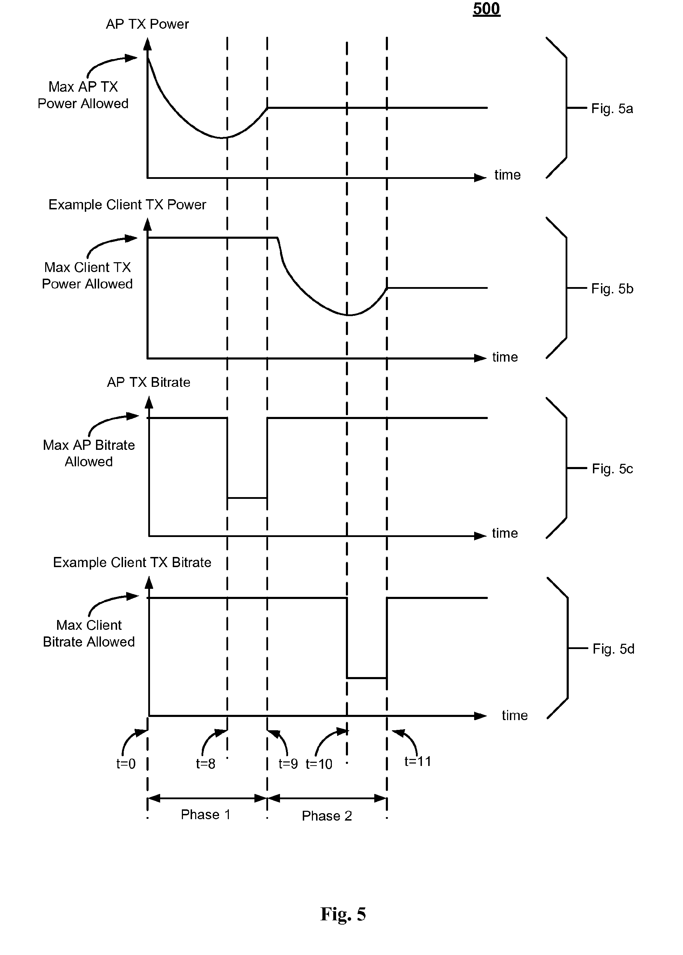

Figure 5 represents a sample plot 500 of AP and client behavior based on aspects of the current invention. In Figure 5, it is assumed that the process flows of Figures 3, Figure 4a, and Figure 4b are used in their respective devices in a WLAN environment. Figure 5 represents a two phase process. In Figure 5, Phase 1 is represented as occurring between times t=0 and times t=9. Phase 2 is represented as occurring between times t=9 and t=11.

In Phase 1 of Figure 5, at t=0, the AP begins by transmitting at a maximum downlink transmit power. This is represented at time t=0 in Figure 5a. Following the process 200 of Figure 2, the AP reduces its downlink transmit power level until the AP downlink bitrate to a selected client device falls at t=8 in Figure 5c. Following the Figure 2 process, the AP then incrementally increases the downlink signal power level until the downlink bitrate to the selected client device rises to the maximum level at time t=9. This rise in transmit power level seen between t=8 and t=9 in Figure 5a and the bitrate rise is seen in Figure 5c at time t=9. The resulting downlink power level from the AP is thus optimized as the lowest downlink transmit power level that supports the maximum downlink bit rate to the selected client device. For the AP, the process 400 of Figure 4A is functioning to optimize the AP transmit power by providing the maximum downlink bitrate for the lowest possible downlink transmit power level in the AP.

In Phase 2, the client devices each optimize their uplink transmit power level beginning shortly after time t=9. Figure 5b depicts one example client uplink transmit power level being incrementally decreased from a maximum level to a lower level. Eventually, the reduced uplink transmit power level reduction results in lowering the uplink bitrate of the example client device as shown in Figure 5d at time t=10. Thereafter, the process 450 of Figure 4b functions to increase the uplink transmit power level of the example client device as shown in Figure 5b between times t=10 and t=11. At time t=11, the example client device uplink power level becomes sufficient to support an increase in bitrate to a maximum level as sown in Figure 5d at time t=11. Thus, for the example client device, the process 450 of Figure 4b functions to optimize the uplink transmit power by providing the maximum uplink bitrate for the lowest possible transmit power level transmitted by the client device. As stated before, the process 450 is conducted by all of the client devices and thus all of the client devices in the WLAN become optimized to provide a maximum uplink bitrate for the lowest possible uplink transmitter power output level. It is noted that the nature of the client device in terms of its WiFi mode (IEEE 802.11 version compatibility) or frequency of operation does not control the overall transmit power optimization of the WLAN system. As earlier discussed, the AP performs process 200 one for each band of wireless client devices. For example, the process of Figure 2 is performed once for the 2.4 GHz band of devices and once for the 5GHz band of wireless client devices. Likewise, the processes of Figures 4a and 4b are performed for the 2.4 GHz band of devices and performed separately for the 5GHz band of wireless client devices. Thus a WLAN system as shown in Figure 1 having different client devices operating at different frequency bands can be accommodated within the operation of the current invention.

Overall, a method of operation of the AP and the client devices may be described as follows. A method to control transmitter signal strength in a wireless local area network having an access point and multiple client devices, includes setup of the AP by transmitting, by the access point, an initial transmit power signal level to the multiple client devices. Measuring, at the access point, a respective downlink bitrate provided to each of the multiple client devices. Selecting a client device having the lowest downlink bitrate. The access point transmitter power signal level is then adjusted so that the downlink bitrate of the selected client device is provided using a minimum of access point transmitter power signal level. This includes reducing the access point transmitter power signal level until the downlink bitrate of the selected client device is reduced, and then increasing the access point transmitter power signal level until the downlink bitrate of the selected client device is increased. The effect of the setup is that the downlink bitrate of the selected client device is maintained for the selected client device using a minimum of access point transmitter power signal level.

A phase 1 regulation of the downlink transmitter power level of the AP is conducted by sending, by the access point to the multiple client devices, respective uplink signal reception levels measured at the access point. The AP requests a downlink signal reception level from the selected client device. The access point transmitter power level to the multiplicity of client devices is minimized based on the downlink signal reception level measured at the selected client device while maintaining the downlink bitrate of the selected client device.

The step of minimizing the access point transmitter power level to the multiplicity of client devices includes receiving, by the access point, the downlink signal reception level measured at the selected client device, and at the access point, determining from the downlink signal reception level measured at the selected client device, if the access point transmitter power level can be reduced while accommodating the downlink bitrate of the selected device, and if so, reducing the access point transmitter power level. This has the effect of the access point power level being minimized to maintain the downlink bitrate of the selected device.

A phase 2 regulation of the uplink transmitter power level in each client device is conducted by minimizing, at each of the multiple client devices, an uplink transmitter power level based on the respective uplink signal reception levels measured at the access point.

The step of minimizing, at each of the multiple client devices, an uplink transmitter power level includes, at each of the multiple client devices, determining from the respective uplink signal reception levels measured at the access point, if a respective client uplink transmitter power level can be reduced while accommodating a respective uplink bitrate of the multiple client devices, and if so, reducing the respective client uplink transmitter power level. This has the effect of the client uplink transmitter power level being minimized to maintain a respective uplink bitrate of each of the multiple client devices. If the system configuration of Figure 1 is used where there are wireless client devices of two different frequency operation bands controlled by a single AP, then the phase 1 and phase 2 operations occur once for the first band of client devices and separately but concurrently for the client devices operating in the other band.

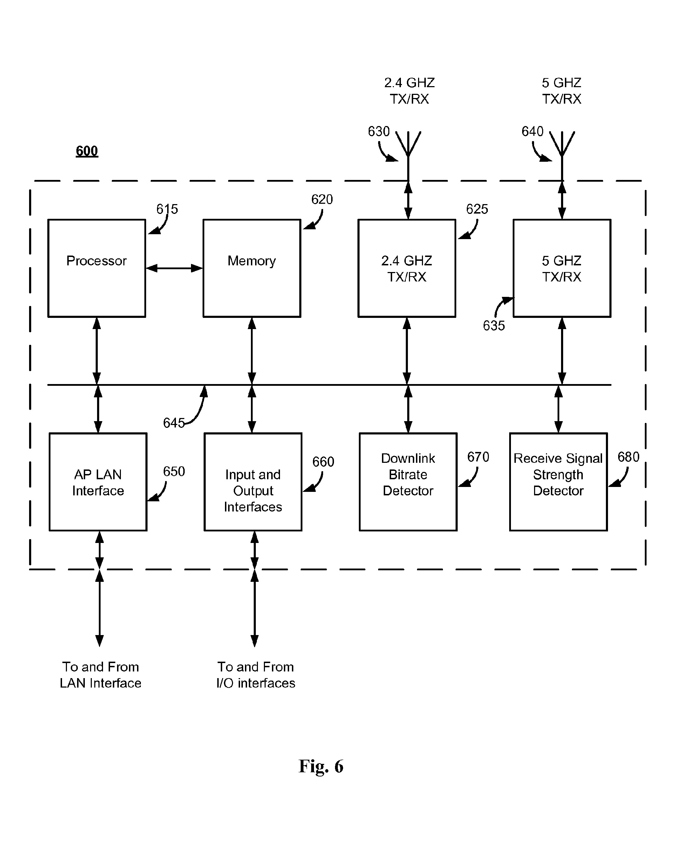

Figure 6 depicts an example AP 600 block diagram showing functional elements that are useful in conjunction with the present invention. The AP includes at least one transmitter and receiver such as the 2.4 GHz transmitter and receiver 625 having RF antenna 630. In addition, a dual-band client accommodation can be made by including a second transmitter and receiver such as the 5GHz transmitter and receiver 635 having RF antenna 640. It is well known that transmitter and receivers can be combined into one transceiver or separately constructed. Either configuration is compatible with the present invention.

Also included in the AP 600 is a downlink bitrate detector 670 to detect the individual downlink rates achieved in communicating with the respective individual client devices associated with the AP 600. A receive signal strength detector 680 is also included in the AP 600 to detect the individual uplink transmission received signal strength information from each of the individual client devices associated with the AP 600.

The AP includes an interface 650 to a Local Area Network (LAN) which serves as the IP head-end for the WLAN system. Optional input and output interfaces 660 may exist to accommodate setup configuration and monitoring of the AP 600 including a user interface (UI) for setup control and system status information. A processor 615 having access to memory 620 functions to control operations of the AP via use of the bus interconnection system 645. A non bus based interconnection system for the AP is an option and is well known in the art of AP design. The processor 615 controls the operation of the elements of the AP 600 using the workflows of Figures 2, and 4a. In one embodiment, the workflows may be included as software or firmware instructions stored in the memory 620 which are executed by the processor 615. Non-processor centric implementations, such as logic-based control implementations, of an AP are also well known in the art of AP design.

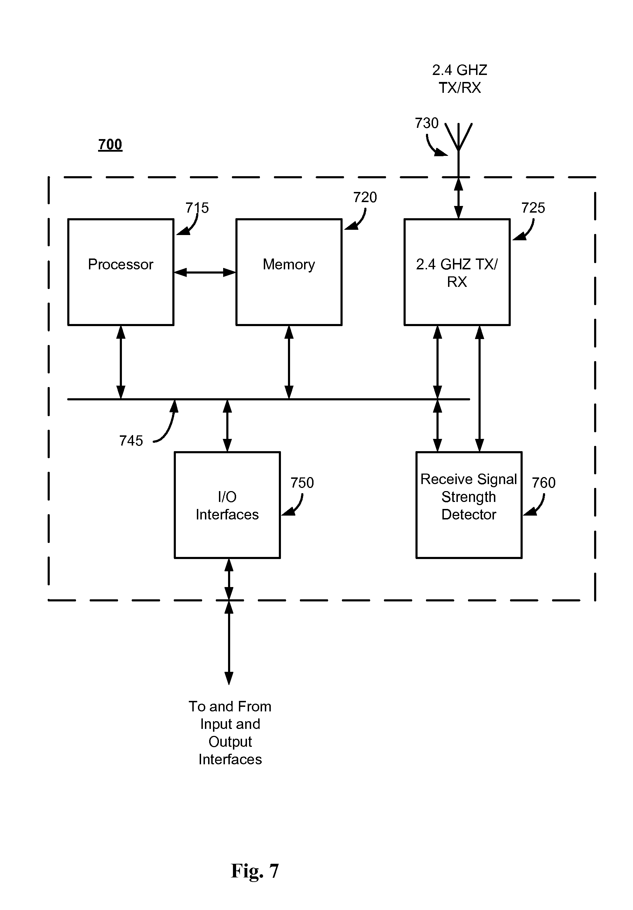

Figure 7 depicts one embodiment of a client device 700 according to aspects of the invention. Specifically, the Figure 7 embodiment depicts a client device which can operate at 2.4GHz using the 2.4 GHz transmit and receive block 725 having antenna 730. A 5 GHz embodiment is also possible but not depicted. The client device 700 includes a receive strength signal strength detector 760 for detecting the level of received downlink signal from the AP. Input and Output (I/O) interfaces 750 are nominally available in a client device to interface a user or user devices to the information communicated to the client device via the radio interface 725. A typical user interface may be available for client device control and status determination.

A processor 715 having access to memory 720 functions to control operations of the client device 700 via use of the bus interconnection system 745. A non-bus based interconnection system for the client device 700 is an option and is well known in the art of remote station or client device design. The processor 715 controls the operation of the elements of the client device 700 using the workflow of Figure 4b. In one embodiment, the workflow may be included as software or firmware instructions stored in the memory 720 which are executed by the processor 715. Non-processor centric implementations, such as logic-based control implementations, of a client device are also well known in the art of remote station design.

It is to be understood that the present invention may be implemented in various forms of hardware, software, firmware, special purpose processors, or a combination thereof. Additionally, the methods may be implemented by instructions being performed by a processor, and such instructions may be stored on a processor or computer-readable media such as, for example, an integrated circuit, a software carrier or other storage device such as, for example, a hard disk, a compact diskette, a random access memory ("RAM"), a read-only memory ("ROM") or any other magnetic, optical, or solid state media. The instructions may form an application program tangibly embodied on a computer-readable medium such as any of the media listed above.

It is to be further understood that, because some of the constituent system components and method steps depicted in the accompanying Figures may be implemented in software or firmware, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method to control transmitter signal strength in a wireless local area network having an access point and multiple client devices, the method comprising:
measuring, by the access point, downlink bitrates from the access point to each of the multiple client devices, and selecting a client device having a lowest downlink bitrate from among the multiple client devices;
adjusting the access point transmitter power signal level, whereby the downlink bitrate of the selected client device is initially established using a minimum of access point transmitter power signal level;
sending, by the access point to the multiple client devices, respective uplink signal reception levels measured at the access point;
requesting, by the access point, a downlink signal reception level from the selected client device;
minimizing the access point transmitter power level to the multiplicity of client devices based on the downlink signal reception level measured at the selected client device while maintaining the downlink bitrate of the selected client device;
minimizing, at each of the multiple client devices, an uplink transmitter power level based on the respective uplink signal reception levels measured at the access point.

2. The method of claim 1, wherein the step of adjusting the access point transmitter power signal level comprises:
reducing the access point transmitter power signal level until the downlink bitrate of the selected client device is reduced; and
increasing the access point transmitter power signal level until the downlink bitrate of the selected client device is increased, whereby the downlink bitrate of the selected client device is maintained for the selected client device using a minimum of access point transmitter power signal level.

3. The method of claim 1, wherein the step of minimizing the access point transmitter power level to the multiplicity of client devices comprises:
receiving, by the access point, the downlink signal reception level measured at the selected client device; and
at the access point, determining from the downlink signal reception level measured at the selected client device, if the access point transmitter power level can be reduced while accommodating the downlink bitrate of the selected device, and if so, reducing the access point transmitter power level, whereby the access point transmitter power level is minimized to maintain the downlink bitrate of the selected device.

4. The method of claim 1, wherein the step of minimizing, at each of the multiple client devices, an uplink transmitter power level comprises:
at each of the multiple client devices, determining from the respective uplink signal reception levels measured at the access point, if a respective client uplink transmitter power level can be reduced while accommodating a respective uplink bitrate of the multiple client devices, and if so, reducing the respective client uplink transmitter power level, whereby the client uplink transmitter power level is minimized to maintain a respective uplink bitrate of the multiple client devices.

5. The method of claim 1, wherein the multiple client devices include devices operating at 2.4Ghz and 5 GHz.

6. An access point apparatus comprising:
a downlink bitrate detector to detect a downlink bitrate for each client device of a multiplicity of wireless client devices;
a signal strength signal detector to detect uplink signal strength transmitted to the access point from each of the client devices;
a processor, coupled to memory, configured to control the access point downlink transmit power level to the multiplicity of client devices by using the bitrate detector to detect a bitrate of the client devices, the processor operates to select a client device having a lowest bitrate from among the multiplicity of client devices, and by minimizing the access point downlink transmit power level to accommodate the bitrate of the selected client device;
wherein the processor is further configured to measure the uplink signal strength transmitted to the access point from each of the client devices and send received signal strength information to each of the client devices to allow each of the client devices to individually regulate an uplink signal strength from each of the respective client devices.

7. The apparatus of claim 6, further comprising:
dual radio interfaces each having a separate band of operation, the dual radio interfaces controlled by the processor such that a selected client device is identified for each band of operation.

8. The apparatus of claim 6, wherein the processor accommodates the dual radio interfaces by sending received signal strength information to each of the client devices within each band to allow each of the client devices within each band to individually regulate a respective uplink signal strength.

9. The apparatus of claim 7, wherein the dual radio interfaces comprise a 2.4 GHZ radio band and a 5GHz radio band utilizing the IEEE 802.11 communication standard.

10. The apparatus of claim 6, wherein the processor initially configures the access point apparatus to downlink to each of the client devices a downlink bitrate constrained by local regulation and compatibility of the respective client device with the access point.
